(19)

Europäisches
Patentamt
European
Patent Office
Office européen
des brevets

(11) **EP 1 359 815 B1**

(12) **EUROPEAN PATENT SPECIFICATION**

(45) Date of publication and mention
of the grant of the patent:
**18.06.2008 Bulletin 2008/25**

(21) Application number: **02711542.7**

(22) Date of filing: **12.02.2002**

(51) Int Cl.:
***A23J 1/14*** (2006.01)    ***A23G 3/00*** (2006.01)

(86) International application number:
**PCT/NL2002/000092**

(87) International publication number:
**WO 2002/071863 (19.09.2002 Gazette 2002/38)**

(54) **METHOD OF MANUFACTURING AN AERATED CARBOHYDRATE CONTAINING FOOD PRODUCT**

VERFAHREN ZUR HERSTELLUNG UND AUFGESCHÄUMTES KOHLENHYDRATHALTIGES
LEBENSMITTEL

PROCEDE DE FABRICATION D'UN PRODUIT ALIMENTAIRE CONTENANT DE L'HYDRATE DE
CARBONE AERE

(84) Designated Contracting States:
**DE FR GB NL**

(30) Priority: **12.02.2001 EP 01200486**

(43) Date of publication of application:
**12.11.2003 Bulletin 2003/46**

(73) Proprietor: **Kerry Group Services International
Limited
Tralee
Co. Kerry (IE)**

(72) Inventors:
• **KUNST, Anthonie
NL-1273 AN Huizen (NL)**
• **DIEDEREN, Johannes Wilhelmus Harmannus
Elisabeth
NL-5242 GB Rosmalen (NL)**

• **DEKKER, Rob
NL-1271 NX Huizen (NL)**
• **BLOM, Wilhelmus, Reinerus
NL-3762 CT Soest (NL)**
• **PLUIJM, Dik, Gijsbert, Barend
NL-3065 HD Rotterdam (NL)**
• **WAAYERS, Franciscus, Petrus
NL-3043 KH Rotterdam (NL)**

(74) Representative: **Jennings, Tara Romaine et al
F. R. Kelly & Co.
27 Clyde Road
Ballsbridge
Dublin 4 (IE)**

(56) References cited:
**WO-A-92/15697          US-A- 4 677 065**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention.

The present invention relates to a method to aerate a carbohydrate containing food product characterised by the use of enzymatically hydrolysed protein as a whipping agent.

### Background of the invention.

Proteins and protein hydrolysates are frequently used as whipping agent in sugar confectionery products. Protein hydrolysates are preferably used in case whipping power is required while proteins are more preferred when a contribution to the stability is required. There are many reports in the literature dealing with the foaming properties of protein hydrolysates. It is generally accepted that hydrolysates obtained from the enzymatic hydrolysis of proteins have the best foaming properties when they are hydrolysed to a degree of hydrolysis in the range of 3-6% (J. Adler Nissen and H.S. Olsen, ACS Symp. Series 92, 125-146, 1979). It can be calculated that the average peptide chain length of the peptides in those hydrolysates is in the range of 25-35 amino acids. Peptides with a smaller chain length, e.g. in the range of 3-4 amino acids, are reported to have poor foaming properties (Turgeon et al, J. Agric. Food Chem., 40, 669-675, 1992). In general such products are recommended for use in dietary drinks, as protein supplements or for protein fortification of soups (US-A 5.520.935)

A further well known drawback of protein hydrolysates with an average peptide chain length of less than 20 amino acids is that they in general have a poor taste due to bitterness and in a number of cases also due to a savoury taste (J. Adler Nissen in Enzymatic Hydrolysis of Food Proteins, Elsevier Applied Science Publishers, 1985, page 57-69). In view of the importance of protein hydrolysates it is no surprise that many methods have been described to reduce the bitterness of hydrolysates. These methods may involve

i) selective separation (Murray and Baker, J. Sci. Food Agric. 3, 470-475,1952),
ii) treatment with exo-peptidases (EP 0,223,560 and EP 0,384,303) and
iii) addition of masking substances (B. Pedersen. Food Technology 48 (10), 96-98, 1984).

With respect to the above-mentioned method (ii) it is brought to the fore that the use of exo-peptidases next to endo-peptidases will result in a reduction of the average peptide size but at the same time will increase the level of free amino acids in the final product. Consequently the savoury taste of the final product will increase. At free amino acid levels above 20 wt.% this will be clearly perceived and in sugar confectionery and dairy products this is generally not wanted.

### Detailed description of the Invention and the preferred Embodiments.

It has now surprisingly been found that when using pea, potato or rice protein hydrolysates with an average peptide chain length in the range of 5 to 20 amino acids, a good taste and a good whipping performance can be achieved in processes in which sugar containing products are aerated.
Consequently no, generally expensive, additional treatments are required to improve the taste of the whipping agent that is used in the method of the present invention. Another advantage is that the whipping agent can be applied at a higher dose rate since it does not suffer from strong off-tastes.

Therefore, the present invention provides a method to aerate a carbohydrate containing food product, which is characterised by the use of a good tasting pea, potato or rice protein hydrolysate as whipping agent comprising peptides with an average chain length in the range of 5-20 amino acids and with a free amino acid level less than 15 wt.% of the total protein derived material.

Preferably the enzymatically hydrolysed pea, potato or rice protein according to the invention has an average peptide chain length in the range of 6 to 18 amino acids and most preferably 7 to 15 amino acids. Further, the whipping agent according to the invention has preferably a free amino acid level of at most 10 wt.%, most preferably at most 5 wt.% of the total protein derived material.

For the sake of clarity, a whipping agent used in processes in which carbohydrate containing mixtures are aerated is defined as any substance with interfacial properties that due to its adsorption dynamics and its presence at the gas-liquid interface will facilitate the uptake and stabilisation of gas cells when the mixture that contains the whipping agent is aerated.

Generally the level of the protein hydrolysate of the present invention in the carbohydrate containing mixture that is aerated, is in the range of 0.01%-10% (w/w). Preferably it is in the range of 0.05% to 5% (w/w).

Non-limiting examples of products obtained from such processes are sugar confectionery products, sorbets, ice creams, milk shakes, nougat, hard boiled sweets, marshmellows and frappés.

Preferably the carbohydrate level in the mixture that is aerated is higher than 10 wt.%, preferably higher than 20 wt% and for instance higher than 50 wt.% calculated on the total amount of the mixture. For instance, in products such as nougat, the aerated sugar mass contains about 90 wt.% sugar. The carbohydrates can be selected from the group consisting of mono-saccharides such as glucose, fructose, di-saccharides such as sucrose, lactose, maltose and oligo-saccharides. The carbohydrates can also be selected from the group that is known to those skilled in the art as glucose syrups, maltodextrins and invert sugars. Glucose syrups or maltodextrins are generally obtained by hydrolysis of starch. The obtained products have widely differing constitutions and properties, depending on the extent to which the starch hydrolysis is allowed to proceed. Invert sugars are obtained after hydrolysis of sucrose.

The enzyme(s) used to produce the pea, potato or rice protein hydrolysate used in the method of the present invention are selected from a wide range of food grade peptidases to give the required peptide chain length distribution and good tasting properties. Non-limiting examples of such enzymes are papain, trypsin, pepsin, subtilisin, bacterial and fungal neutral proteases and bacterial and fungal acid proteases.

The free amino acid level in the hydrolysate can be analysed using standard methods well known to those skilled in the art. The average peptide chain length can be calculated as decribed below.

**Calculation of the average peptide chain length.**

Definitions

TN :      Total Nitrogen.
AN :      Alpha amino Nitrogen.
EN :      Epsilon amino Nitrogen.
AEN :     The sum of alpha and epsilon nitrogen.
PN :      Nitrogen in (potential) peptide bonds (PN thus includes all AN).
FAA :     free amino acid level.
F :       average amount of Nitrogen per amino acid residue in a protein.
PCL :     average peptide chain length.

Determination of parameters

AEN can be determined via methods such as the TNBS (trinitrobenzene sulphonic acid) method or via formol titration.
TN can be determined via the well known Kjeldahl method.
EN is only present in the side chain of lysine so it is equal to the amount of lysine in the product.
FAA is determined using an amino acid analyser.

AN can be calculated from the AEN (as determined via TNBS or formol titration) and the amount of lys (= EN) in the protein hydrolysate.

$$AN = AEN - EN \qquad\qquad (1)$$

PN can be approximated from TN using the average amount of nitrogen (F) per amino acid.

$$PN = TN/F \qquad\qquad (2)$$

Most amino acids only have one alpha nitrogen atom but trp, lys, asn and gln have 1 extra nitrogen in the side chain, his has 2 extra nitrogen and arg has 3 extra nitrogen in the side chain. In Table 1 the average amount of Nitrogen per amino acid (F) for pea, potato and rice protein is given as well as the average mol. weight of the amino acids in the protein, the conversion factor ($N_{conf}$) from nitrogen to protein and the % lysine.

**Table 1. Data on pea, potato and rice protein.**

|  | $N_{conf}$ | $MW_{avg}$ | F, mol/mol | %lys |
|---|---|---|---|---|
| pea protein | 6.30 | 131.7 | 1.29 | 7.61 |
| potato protein | 6.50 | 131.2 | 1.25 | 7.77 |
| rice protein | 5.90 | 129.9 | 1.35 | 4.97 |

Calculation of the average peptide chain length

The average peptide chain length can be calculated from AN and PN:

$$PCL = PN/AN \qquad (3)$$

$$\text{Combining eq. 3 with eq. 2 gives:} \quad PCL = TN/(F{*}AN) \qquad (4)$$

$$\text{Combining eq. 4 with eq. 1 gives:} \quad PCL = TN/(F {*} (AEN{-}EN)) \qquad (5)$$

With eq. 5 the average peptide length in a hydrolysate is calculated in which also the FAA is taken into account. Strictly spoken an amino acid is not a peptide and FAA thus should not be included in the calculation of the average PCL. To calculate the average peptide length of the non FAA fraction, TN and AN of this fraction are required. Rewriting eq. 4 for the peptide fraction gives:

$$PCL_{pep} = TN_{pep}/(F{*}AN_{pep}) \qquad (6)$$

in which:

$$TN_{pep} = TN - TN_{FAA} \qquad (7)$$

$$TN_{FAA} = F {*} FAA \qquad (8)$$

$$AN_{pep} = AN - FAA \qquad (9)$$

Combining eq. 6 with eq 1,7,8 and 9 results in:

$$PCL_{pep} = \frac{TN/F - FAA}{AEN - EN - FAA} \qquad (10)$$

in which TN, AN, AEN, EN and FAA are given in mmol per weight unit.

The following examples are non-limiting examples of the present invention.

### Example 1. Production of a rice protein hydrolysate.

An 8% dispersion of rice protein isolate (from Remy) was hydrolysed during 4 hours with 1% (E/S) of the commercially available papain preparation Profix Conc (from Quest-International) at pH 7.0 and 60°C. The pH during hydrolysis was kept contant. After hydrolysis the enzyme was inactivated via a heat treatment of 1 minute at 90°C. Residual intact protein and insoluble components were removed via centrifugation. The obtained clarified fluid was concentrated via evaporation and was then freeze dried.

The obtained final product was characterised using the above described methods. The TN was found to 12.2 %, the AN was 1.21 % and the FAA was 0.78 %. The average peptide chain length can be calculated to be 10.4 amino acids.

The whipping performance of the product was tested by whipping a solution containing 150 gram icing sugar, 73 gram water and 3 gram of the hydrolysate in a Hobart mixer type N 50 with the wire wisk. The foam density (g/ml) was determined after 2 min and after 5 min whipping at speed 3.

The taste of the hydrolysate was evaluated by a small expert panel of 5 persons trained in the evaluation of protein hydrolysates. In the evaluation a 2% solution of the hydrolysate in demineralised water was tasted as well as a sample of the foam that was obtained after 5 min of aeration using the procedure as described above.

The whipping performance and the taste of the hydrolysate produced as decribed in this example were compared with that of the well known commercially available whipping agents Hyfoama DSN and Versawhip 500 (both available from Quest-International). Hyfoama DSN is a casein hydrolysate and Versawhip 500 is a soy protein hydrolysate.

The results are summarised in Table 2 and show that the taste of the rice protein hydrolysate of the present invention is preferred over that of two existing commercially available products. The off flavour in Versawhip 500 and in Hyfoama DSN was also noticed in the aerated sugar mass despite the masking effect of the high sugar level. The whipping performance is at least as good (even slightly better) than that of the commercially available products.

**Table 2.**

|  | Foam density 2 min. | Foam density 5 min. | Taste of 2% solution | Preference |
|---|---|---|---|---|
| rice protein hydrolysate | 0.27 | 0.24 | slight rice taste | 1 |
|  |  |  |  |  |
| Versawhip 500 | 0.27 | 0.27 | bitter, salty | 2 |
| Hyfoama DSN | 0.26 | 0.27 | bitter, chalky | 3 |

### Example 2. Production of a pea protein hydrolysate.

An 8% dispersion of pea protein isolate (from Cosucra) was hydrolysed for 4 hours with 0.5% (E/S) of the commercially available enzyme preparation Alcalase 2.4 L (from NOVO) at pH 8.0 and 50°C. The pH during hydrolysis was not controlled. After hydrolysis the enzyme was inactivated via a heat treatment of 1 minute at 90°C. Residual intact protein and insoluble components were removed via centrifugation. The obtained clarified fluid was concentrated via evaporation and was then spray dried.

Analysis showed that the TN of the obtained hydrolysate was 13.3%, the AN was 1.65 % and the FAA was 0.70%. The average peptide chain length can be calculated to be 10.6 amino acids.

The whipping performance and the taste of the obtained product were tested as described in Example 1. The results are summarised in Table 3. They show that the taste of the pea protein hydrolysate of the present invention is preferred over that of two existing commercially available products. The whipping performance is slightly better than that of the commercially available products.

**Table 3.**

|  | Foam density 2 min. | Foam density 5 min. | Taste of 2% solution | Preference |
|---|---|---|---|---|
| pea protein hydrolysate | 0.25 | 0.25 | neutral, sweet | 1 |
|  |  |  |  |  |
| Versawhip 500 | 0.27 | 0.27 | bitter, salty | 2 |
| Hyfoama DSN | 0.26 | 0.27 | bitter, chalky | 3 |

**Example 3. Production of a potato protein hydrolysate.**

An 8% dispersion of potato protein isolate (from Roquette) was hydrolysed for 4 hours with 1.0% (E/S) of Alcalase 2.4 L (NOVO) at pH 8.0 and 55°C. The pH during hydrolysis was not controlled. After hydrolysis the enzyme was inactivated via a heat treatment of 1 minute at 90°C. Residual intact protein and insoluble components were removed via centrifugation. The obtained clarified fluid was concentrated via evaporation and was then spray dried.

Analysis showed that the TN of the obtained hydrolysate was 12.6%, the AN was 2.2 % and the FAA was 3.5%. The average peptide chain length can be calculated to be 7.4 amino acids.

The whipping performance and the taste of the obtained product were tested as described in Example 1. The results are summarised in Table 4. They show that the taste of the potato protein hydrolysate of the current invention is preferred over that of two existing commercially available products. The whipping performance is slightly better than that of the commercially available products.

**Table 4.**

|  | Foam density 2 min. | Foam density 5 min. | Taste of 2% solution | Preference |
|---|---|---|---|---|
| potato protein hydrolysate | 0.31 | 0.28 | neutral | 1 |
|  |  |  |  |  |
| VW 500 | 0.27 | 0.27 | bitter | 2 |
| Hyfoama DSN | 0.26 | 0.27 | bitter, chalky | 3 |

**Example 4**

A pea protein hydrolysate that was produced as described in Example 2 was tested in a sorbet type application with about 25% sugar.

A mixture containing 16.9 gram sucrose, 35.2 gram Maltodextrin 43 DE, 135.3 gram water, 1.9 gram protein hydrolysate and 0.56 gram stabiliser blend Sherex IC 9509 (from Quest International) was heated to 75 °C (to dissolve the stabiliser) and cooled to ambient temperature. The mixture was than whipped for 5 min at speed 2 in a Hobart N50 mixer using the wirewhisk.

The aerated mass was transferred to a measuring cilinder, the volume was recorded after 0, 30 and 60 min., the liquid drain was recorded after 30 and 60 minutes. The performance was again compared with that of Hyfoama DSN and Versawhip 500. The results are summarised in Table 4.

It can be seen that the pea protein hydrolysate of the present invention performs very good in sorbet type applications. Not only the whipping power is good but also the foam stability and the drainage stability are good and better than that of current commercially available protein hydrolysates.

**Table 5.**

|  | t=0 | t=30 | | t=60 | |
|---|---|---|---|---|---|
|  | Volume | Volume | Drain | Volume | Drain |
| pea protein hydrolysate | 820 ml | 820 ml | 20 ml | 820 ml | 50 ml |
|  |  |  |  |  |  |
| Versawhip 500 | 720 ml | 720 ml | 60 ml | 720 ml | 100 ml |
| Hyfoama DSN | 880 ml | 800 ml | 70 ml | 400 ml | 145 ml |

**Claims**

1. Method for aerating carbohydrate containing food products by using an enzymatically hydrolysed protein as whipping agent, **characterised in that** the whipping agent is an enzymatically hydrolysed pea, potato or rice protein having an average peptide chain length in the range of 5 to 20 amino acids and a free amino acid level of at most 15 wt.% of the total protein derived material.

2. Method according to claim 1, **characterised in that** the whipping agent is an enzymatically hydrolysed pea, potato or rice protein having an average peptide chain length in the range of 6 to 18 amino acids, preferably 7 to 15 amino acids.

3. Method according to claim 1 or 2, **characterised in that** the whipping agent has a free amino acid level of at most 10 wt.%, preferably at most 5 wt.% of the total protein derived material.

4. Method according to any of the claims 1-3, **characterised in that** the whipping agent is an enzymatically hydrolysed pea protein.

5. Method according to any of the claims 1-3, **characterised in that** the whipping agent is an enzymatically hydrolysed rice protein.

6. Method according to any of the claims 1-3, **characterised in that** the whipping agent is an enzymatically hydrolysed potato protein.

7. Method according to any of the claims 1-6, **characterised in that** the carbohydrate is selected from the group consisting of monosaccharides, disaccharides, oligosaccharides, glycose syrup, maltodextrin and invert sugar.

8. Method according to any of the claims 1-7, **characterised in that** the carbohydrate level of the product as percentage of the total dry matter weight is at least 10 wt.%.

9. Method according to any of the claims 1-7, **characterised in that** the carbohydrate level of the product as percentage of the total dry matter weight is at least 20 wt.%.

10. Aerated carbohydrate containing food product, obtainable by the method according to claims 1-9.

11. Whipping agent, being an enzymatically hydrolysed pea, potato or rice protein, having an average peptide chain length in the range of 5 to 20, preferably 6 to 18 and most preferably 7 to 15 amino acids and a free amino acid level of at most 15 wt.%, preferably at most 10 wt.% and most preferably at most 5 wt.% of the total protein derived material.

**Patentansprüche**

1. Verfahren zum Belüften von kohlenhydrathaltigen Lebensmittelprodukten durch Verwendung eines enzymatisch hydrolysierten Proteins als Aufschlagmittel, **dadurch gekennzeichnet, dass** das Aufschlagmittel ein enzymatisch hydrolysiertes Erbsen-, Kartoffel- oder Reisprotein mit einer durchschnittlichen Peptidkettenlänge im Bereich von 5 bis 20 Aminosäuren und einer Höhe von freien Aminosäuren von höchstens 15 Gew.-% des gesamten, vom Protein stammenden Stoffes ist.

2. Verfahren gemäß Anspruch 1, **dadurch gekennzeichnet, dass** das Aufschlagmittel ein enzymatisch hydrolysiertes Erbsen-, Kartoffel- oder Reisprotein mit einer durchschnittlichen Peptidkettenlänge im Bereich von 6 bis 18 Aminosäuren, bevorzugt 7 bis 15 Aminosäuren ist.

3. Verfahren gemäß Anspruch 1 oder 2, **dadurch gekennzeichnet, dass** das Aufschlagmittel eine Höhe von freien Aminosäuren von höchstens 10 Gew.-%, bevorzugt höchstens 5 Gew.-% des gesamten, vom Protein stammenden Stoffes aufweist.

4. Verfahren gemäß einem der Ansprüche 1-3, **dadurch gekennzeichnet, dass** das Aufschlagmittel ein enzymatisch hydrolysiertes Erbsenprotein ist.

5. Verfahren gemäß einem der Ansprüche 1-3, **dadurch gekennzeichnet, dass** das Aufschlagmittel ein enzymatisch hydrolysiertes Reisprotein ist.

6. Verfahren gemäß einem der Ansprüche 1-3, **dadurch gekennzeichnet, dass** das Aufschlagmittel ein enzymatisch hydrolysiertes Kartoffelprotein ist.

7. Verfahren gemäß einem der Ansprüche 1-6, **dadurch gekennzeichnet, dass** das Kohlenhydrat aus der Gruppe ausgewählt ist, die aus Monosacchariden, Disacchariden, Oligosacchariden, Glucosesirup, Maltodextrin und Invertzucker besteht.

8. Verfahren gemäß einem der Ansprüche 1-7, **dadurch gekennzeichnet, dass** die Höhe von Kohlenhydraten des Produkts als Prozentanteil des gesamten Trockenmassegewichts mindestens 10 Gew.% beträgt.

9. Verfahren gemäß einem der Ansprüche 1-7, **dadurch gekennzeichnet, dass** die Höhe von Kohlenhydraten des Produkts als Prozentanteil des gesamten Trockenmassegewichts mindestens 20 Gew.-% beträgt.

10. Belüftetes kohlenhydrathaltiges Lebensmittelprodukt, das durch das Verfahren gemäß den Ansprüchen 1-9 erhältlich ist.

11. Aufschlagmittel, das ein enzymatisch hydrolysiertes Erbsen-, Kartoffel- oder Reisprotein ist, das eine durchschnittliche Peptidkettenlänge im Bereich von 5 bis 20, bevorzugt 6 bis 18 und am bevorzugtesten 7 bis 15 Aminosäuren und eine Höhe von freien Aminosäuren von höchstens 15 Gew.-%, bevorzugt höchstens 10 Gew.-% und am bevorzugtesten höchstens 5 Gew.-% des gesamten, vom Protein stammenden Stoffes aufweist.

**Revendications**

1. Procédé d'aération de produits alimentaires contenant des glucides par l'utilisation d'une protéine hydrolysée par voie enzymatique en tant qu'agent moussant, **caractérisé en ce que** l'agent moussant est une protéine de pois, de pomme de terre ou de riz hydrolysée par voie enzymatique qui possède une longueur de chaîne peptidique moyenne comprise dans la plage de 5 à 20 acides aminés et un taux d'acides aminés libres d'au plus 15 % en poids de la substance totale dérivée de protéine.

2. Procédé selon la revendication 1, **caractérisé en ce que** l'agent moussant est une protéine de pois, de pomme de terre ou de riz hydrolysée par voie enzymatique qui possède une longueur de chaîne peptidique moyenne comprise dans la plage de 6 à 18 acides aminés, de préférence de 7 à 15 acides aminés.

3. Procédé selon la revendication 1 ou 2, **caractérisé en ce que** l'agent moussant possède un taux d'acides aminés libres d'au plus 10 % en poids, de préférence d'au plus 5 % en poids de la substance totale dérivée de protéine.

4. Procédé selon l'une quelconque des revendications 1 à 3, **caractérisé en ce que** l'agent moussant est une protéine de pois hydrolysée par voie enzymatique.

5. Procédé selon l'une quelconque des revendications 1 à 3, **caractérisé en ce que** l'agent moussant est une protéine de riz hydrolysée par voie enzymatique.

6. Procédé selon l'une quelconque des revendications 1 à 3, **caractérisé en ce que** l'agent moussant est une protéine de pomme de terre hydrolysée par voie enzymatique.

7. Procédé selon l'une quelconque des revendications 1 à 6, **caractérisé en ce que** le glucide est choisi dans le groupe constitué par les monosaccharides, les disaccharides, les oligosaccharides, le sirop de glucose, la maltodextrine et le sucre inverti.

8. Procédé selon l'une quelconque des revendications 1 à 7, **caractérisé en ce que** le taux de glucide du produit sous la forme du pourcentage du poids total de matière sèche vaut au moins 10 % en poids.

9. Procédé selon l'une quelconque des revendications 1 à 7, **caractérisé en ce que** le taux de glucide du produit sous la forme du pourcentage du poids total de matière sèche vaut au moins 20 % en poids.

10. Produit alimentaire aéré contenant un glucide, qui peut être obtenu par le procédé selon les revendications 1 à 9.

11. Agent moussant, qui est une protéine de pois, de pomme de terre ou de riz hydrolysée par voie enzymatique, possédant une longueur de chaîne peptidique moyenne comprise dans la plage de 5 à 20, de préférence de 6 à 18 et de la manière la plus préférée entre toutes de 7 à 15 acides aminés et un taux d'acides aminés libres d'au plus 15 % en poids, de préférence d'au plus 10 % en poids et de la manière la plus préférée entre toutes d'au plus 5 % en poids de la substance totale dérivée de protéine.

# EP 1 359 815 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5520935 A
- EP 0223560 A
- EP 0384303 A

### Non-patent literature cited in the description

- **J. ADLER NISSEN ; H.S. OLSEN.** *ACS Symp. Series,* 1979, vol. 92, 125-146
- **TURGEON et al.** *J. Agric. Food Chem.,* 1992, vol. 40, 669-675
- **J. ADLER NISSEN.** Enzymatic Hydrolysis of Food Proteins. Elsevier Applied Science Publishers, 1985, 57-69
- **MURRAY ; BAKER.** *J. Sci. Food Agric.,* 1952, vol. 3, 470-475
- **B. PEDERSEN.** *Food Technology,* 1984, vol. 48 (10), 96-98